# EUROPEAN PATENT APPLICATION

(11) **EP 2 141 042 A1**
(43) Date of publication of application: **06.01.2010**
(21) Application number: 09164088.8
(22) Date of filing: 01.07.2009
(51) Int. Cl.: B60K 15/03, C10L 3/12, F02B 43/00, F02M 21/00, C09K 3/30, F17C 5/06, B65D 83/14, F02B 77/04

(54) **Apparatus for filling an additive or a mixture of additives into a tank of liquefied petroleum gas (LPG)**

(30) Priority: 01.07.2008 IT TV20080017 U
(71) Applicant: Mori, Stefano, 31057 Cendon di Silea (TV) (IT)
(72) Inventor: Mori, Stefano, 31057 Cendon di Silea (TV) (IT)
(74) Representative: Sarpi, Maurizio

(57) **Abstract**

An apparatus for filling an additive (3) or a mixture of additives into a tank of liquefied petroleum gas (LPG) includes essentially an aerosol cylinder (1) containing a suitable propellant or a propellant mixture and an additive (3) or a mixture of additives to be input into a LPG tank, said cylinder being provided with suitable means (4) to tightly connect it to the filler of the LPG tank.

Preferably, said cylinder has a size of a normal spray ready for use.

## Description

Otto cycle engines powered by liquefied petroleum gas (LPG) are fed by sequential gas fuel feeding systems, i.e. injectors or solenoid valves metering gaseous-state LPG in the air suction conduits of the engine cylinders, thus allowing an air-gas mixture to be formed and to explode inside the combustion chamber to make the engine running.

It is important that such feeding systems meter the same quantity of gas in each combustion chamber of the engine and that the input of fuel gas is made at the right time.

The input is controlled by electrical signals supplied by an electronic central unit which receives signals from the sensors connected to the engine at the right time (injection step) and also controls the quantity of gas to be injected (injection step).

In order to achieve a good running of the Otto cycle engines fed with gaseous-state LPG it is appropriate that the whole feeding system is kept clean as long as possible, thus avoiding scales and inside oxidations. To do this, it is necessary to add now and then particular additives or mixtures containing additives to LPG.

The main object of the finding is to provide an apparatus which allows the user without any particular equipment or specific skill to input said additive into the tank of LPG feeding the engine in an easy, quick way and with the maximum safety even when some LPG is still contained in the tank of LPG to feed the engine so that the interior of the tank is under pressure because of such a presence of LPG.

This object is accomplished according to the invention by providing an aerosol cylinder containing a suitable propellant mixture and an additive or a mixture of additives to be input into a tank of LPG, which cylinder is provided with means to connect it tightly to the filler of the tank.

A better understanding of the invention will ensue from the following description with reference to the accompanying drawings which show by way of an exemplifying, not limiting example a preferred embodiment thereof.

In the drawings:
Figure 1 is a three-dimensional view of the finding with the two main not assembled portions; and

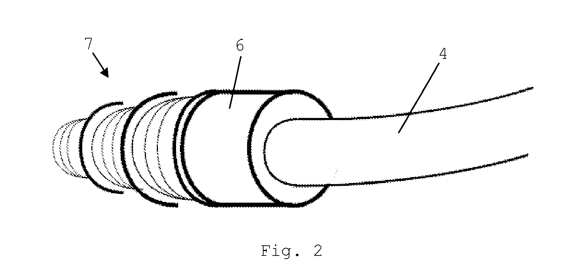

Figure 2 shows a particular of the male end union to be screwed to the filler of the tank of LPG.

The apparatus according to the present invention includes essentially:
- a aerosol container or cylinder 1 under pressure capable of containing the additive to be added to LPG inside the tank for feeding the engine,
- an aerosol delivery valve 2 capable of being used in an overturned position and without suction hose;
- a propellant 3 consisting of butane and/or propane and/or carbon dioxide or a mixture thereof metered according to the volume of container 1, which mixture is filled under pressure inside cylinder 1 through a suitable gas supplying system of the known type;
- a pipe 4 having at one end a female joint 5 snap-fitted to the pipe to couple and connect tightly the latter to male delivery valve 2, and at the other end a male joint 6 also snap-fitted to pipe 4 and provided with conical male thread 7.

According to the invention, said delivery valve 2 is provided with suitable clamps to be sealingly connected to the opening of aerosol cylinder 1.

A peculiar feature of the invention consists in that the male conical thread 7 at the end of pipe 4 is preferably divided into three coaxial threads with diameters and pitches different from one another.

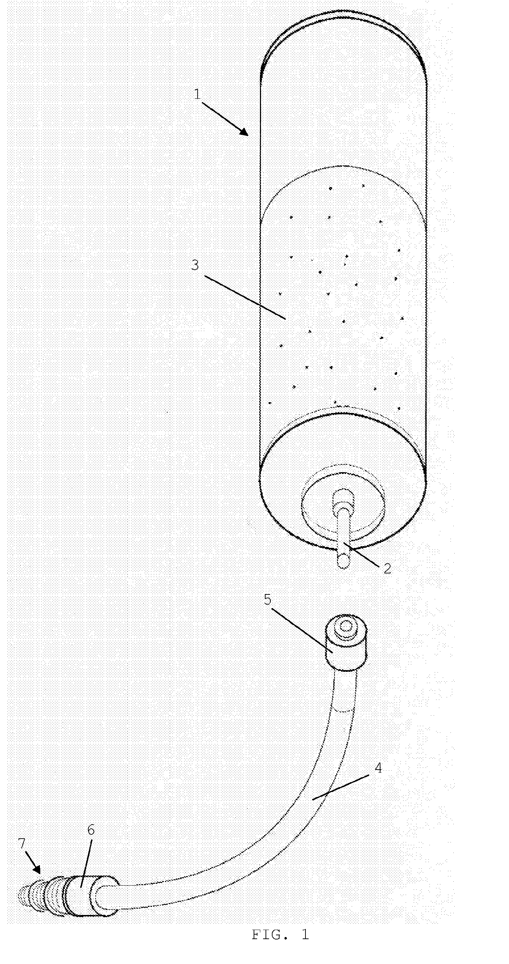

The apparatus for filling an additive into the liquefied petroleum gas hitherto disclosed is shown as a whole in figure 1.

The method of pouring off the additive from cylinder 1 to LPG tank feeding the engine is carried out by the following operations:
A) When the engine is switched off and the tank is empty or contains LPG, the male threaded portion 7 of joint 6 on pipe 4 is screwed to the central hole of the filler of LPG tank to which the additive has to be added. Depending on the type of the thread as far as diameter and pitch of the filler is concerned, it is advantageously possible to cut away a portion of the thread of the joint to tighten the threaded joint to the filler;
B) The male portion of delivery valve 2 fitted to the aerosol cylinder 1 is inserted into the female joint 5 on pipe 4 and coupled sealingly;
C) Aerosol cylinder 1 is positioned vertically and in overturned position and the female joint 5 of pipe 5 is rigidly inserted into delivery valve 2, whereupon aerosol cylinder is pushed slightly downwards by hand so that delivery valve 2 is opened, thus allowing mixture 3 containing the additive to come out of aerosol cylinder 1 to the LPG tank.

It should be appreciated that said cylinder can be easily traversed by the user who can carry and operate it by hand as it has the size of an ordinary spray ready for use.

Advantageously, the operation of pouring off the additive from aerosol cylinder 1 to LPG tank to which the additive has to be added is carried out in a few seconds due to the thrust of the propellant mixture 3 consisting of butane, propane and carbon dioxide originally present in the aerosol cylinder together with the additive.

## Claims

1. An apparatus for filling an additive or a mixture of additives into a tank of liquefied petroleum gas (LPG), **characterized in that** there is essentially provided an aerosol cylinder containing a suitable propellant of propellant mixture and an additive or a mixture of additives to be input into a LPG tank, said cylinder being provided with suitable means to tightly connect it to the filler of the LPG tank.

2. The apparatus according to the preceding claim, **characterized in that** there is provided in combination:
- a aerosol container or cylinder (1) under pressure capable of containing at last one additive to be added to LPG inside the tank for feeding the engine,
- an aerosol delivery valve (2) capable of being used in an overturned position and without suction hose;
- a propellant (3) consisting of butane and/or propane and/or carbon dioxide or a mixture thereof metered according to the volume of container (1), which mixture is filled under pressure inside cylinder (1) through a suitable gas supplying system of the known type;
- a pipe (4) having at one end a female joint 5 snap-fitted to the pipe to couple and connect tightly the latter to male delivery valve (2), and at the other end a male joint (6) also snap-fitted to pipe (4) and provided with conical male thread (7) for its screwing to the filler of LPG tank.

3. The apparatus according to the preceding claim, **characterized in that** said delivery valve (2) is provided with suitable clamps to be sealingly connected to the opening of aerosol cylinder (1).

4. The apparatus according to claim 2,
**characterized in that** the male conical thread (7) at the end of pipe (4) is divided into at least three coaxial threads with a diameter and a pitch different from one another.

5. The apparatus according to the preceding claim, **characterized in that** depending on the type of the thread as far as diameter and pitch of the LPG filler is concerned, a portion of male thread (7) of joint (6) can be cut away to tighten it to the filler correctly.

6. The apparatus according to claim 2,
**characterized in that** the male threaded portion (7) of joint (6) on pipe (4) is able to be screwed to the central hole of the filler of LPG tank to which the additive has to be added.

7. The apparatus according to the preceding claim, **characterized in that** in operation aerosol cylinder (1) is able to be kept in a vertical overturned position and the male portion of delivery valve (2) is able to be coupled sealingly to female joint (5) on pipe (4) and pressed against it to cause valve (2) to open and the additive to come out to LPG tank.

8. The apparatus according to claim 1,
**characterized in that** said cylinder (2) has the size of an ordinary spray which can be easily carried and traversed by the user.
